# EUROPEAN PATENT SPECIFICATION

(11) **EP 3 631 261 B1**
(45) Date of publication and mention of the grant of the patent: **05.08.2026**
(21) Application number: 18805092.6
(22) Date of filing: 15.05.2018
(51) Int. Cl.: F16K 31/122, F16K 15/06, B65D 88/70

(54) **AERATOR VALVE ASSEMBLY**
VENTILANORDNUNG FÜR LUFTKANONE
ENSEMBLE SOUPAPE D'AÉRATEUR

(30) Priority: 23.05.2017 US 201715603329
(43) Date of publication of application: 08.04.2020
(73) Proprietor: Control Concepts, Inc., Putnam, CT 06260 (US)
(72) Inventor: TIFFANY, Henry D, Juneau, AK 99802 (US); ROSE, Paul S., Sanibel, FL 33957 (US); HALL, Aaron G., North Grosvenordale, CT 06255 (US); SMITH, Daniel S., Woodstock, CT 06281 (US)
(74) Representative: Morbidini, Marco
(86) International application number: PCT/US2018/032823
(87) International publication number: WO 2018/217503

(56) References cited:
- WO-A1-2005/036039
- US-A1- 2005 006 489
- US-A1- 2008 202 606
- US-A1- 2011 284 781
- US-A1- 2013 319 551
- US-A1- 2014 299 798
- US-A1- 2014 303 793
- US-A1- 2017 066 589
- US-B1- 6 237 893
- US-B2- 7 273 205
- US-B2- 8 091 582

## Description

### Background

### 1. Field of Use

This disclosure relates generally to a valve construction for releasing a relatively large volume of pressurized gas into a storage vessel containing granular material and the like for the purpose of accelerating the flow of the granular material therefrom and more particularly to modifying such valve construction for improved operation.

### 2. Description of Prior Art (Background)

Discharging particulate material from an opening in a storage vessel is sometimes troublesome because of clogging, bridging, rat-holing or sticky build-up of the particulate material on the vessel walls, which can occur anywhere in the vessel but usually occurs near the discharge outlet of the vessel. This clogging is often aggravated when the particulate material is moist or contains additives that make it sticky. Numerous attempts have been made in the past to alleviate this problem For example, it has been proposed to mount one or more gas discharge devices on the vessel walls or sloping sides of hoppers containing particulate material. Such discharge aid devices have a nozzle extending into the hopper for directing a blast of gas into the hopper to reduce clogging and bridging of the material contents so that the material can be discharged by conventional gravity or to assist other unloading equipment as disclosed in U.S. Pat. No. 3,788,527. While such prior art discharge aid devices, such as air blasters or air pulsing, have met with varying degrees of commercial success, the devices all have open discharge ends which are subjected to particulate material and fines entering into the devices via the openings and fouling the internal mechanisms and rendering the devices partially or completely inoperative. This shortcoming of the prior art devices necessitates shutdowns for costly repair, cleaning and loss of production.

Also, by the nature of construction for the prior art devices, close tolerances of the internal valve member to the surrounding outer housing are necessary for these air blasters to operate efficiently. This creates a problem where temperature changes in the surrounding environment can cause binding between parts having different thermal expansion coefficients, thereby causing eventual operational failure. These temperature variations can be seasonal or daily, caused by changing environmental conditions, or created by the industrial processes involved.

A related serious problem occurring with operation of these prior art valve constructions is that of contaminating the stored particulate material with metal pieces derived from the valve itself or its mounting plate, such as weldment bits.

An aerator valve of this type now in wide commercial use has also been developed having fewer moving parts than disclosed in the aforementioned prior art patent. Unfortunately, the modified valve construction still remains prone to much of the above noted operational difficulties attributable at least in part to having critical components fabricated with weldments. Basically, the modified valve construction includes an outer housing with front and back ends terminating a central inner passageway, a movable valve member slidably engaged within the central passageway in the outer housing, a spring loaded valve guide member affixed within the central passageway in the outer housing intermediate the front and back ends, and a pneumatic valve mechanism supplying a pressurized gas medium to drive the valve member forward unseating the front end of the passageway and releasing the pressurized gas to the surrounding atmosphere. In constructing the commercial valve device, the valve member is designed with an enlarged head termination sealing the front end of the central passageway and with the member having been formed with multiple component parts joined together by conventional welds. More particularly, a machined rod is employed which is threaded into and welded to a separate enlarged head portion of the member and with the enlarged head portion further terminating with a welded end cap. Still further welding of a metal compression spring to the spring loaded valve guide member employed in the valve construction occasions frequent device failure during valve operation accompanied by introducing weld fragments into the storage vessel where employed.

In addition, to determine if, or when, maintenance is required for an aerator valve requires rough estimations of the high count cyclic operation of the aerator valve. This approach does not take into account defective parts, abnormal operating conditions, or normal wear and tear. US 6,237,893 B1 discloses a high pressure aerator valve. US 2017/066589 A1 discloses a sanitary high pressure aerator valve.

To overcome the aforementioned operational difficulties with this type valve device, there is now provided an improved pneumatic powered gas discharge valve construction having few internal parts and which can still further be affixed to assorted storage vessels in an improved manner. In doing so, the present valve device can be connected to a high flow pulse type electric solenoid valve for installation on one or more storage vessel side walls to direct repeated pulses of the pressurized gas medium being released between the particulate material being stored and the inner vessel wall. Multiple installations of the presently improved valve device are contemplated with individual valves being equally spaced about the side walls of the storage vessel when desired. Affixing of the presently improved valve construction to a storage vessel side wall or multiple side walls has also been simplified for cost reduction and required maintenance or valve removal. More particularly, the prior art valve installations customarily employ a flat mounting plate coupled to another flat mounting flange in order to physically secure
the valve device to the vessel side wall and with the vessel side wall often having a curved contour requiring considerable welding to accomplish such manner of joinder. As distinct therefrom, the presently improved valve construction enables joinder of the valve device to the vessel side wall with a novel weld-on mounting collar.

It is an object of the present disclosure, therefore, to provide an operationally improved gas-powered discharge aid device having fewer non-welded internal working parts.

It is another object of the present disclosure to provide the presently improved gas discharge device in a manner requiring few or no tools for assembly, calibration, or maintenance.

Another object of the present disclosure provides real time sensor data for immediate action or analytic analysis.

A still further object of the present disclosure is to provide improved means whereby the presently improved gas discharge device can be physically secured to the side walls of a storage vessel.

It is yet another object of the present disclosure to provide a novel cooperation between the presently improved gas discharge device and the mounting means whereby the device can be physically secured to a storage vessel side wall

These and still further objects of the present disclosure will become apparent upon considering the following detailed description of the present disclosure.

### Brief Summary

The present invention is directed towards an aerator valve assembly having an outer housing with front and back ends terminating a central passageway; a movable valve member having a one-piece unitary metal construction slidably engaged within the central passageway in the outer housing, the valve member having an enlarged head termination sealing the front end of the passageway. The assembly also includes a spring-loaded spring guide member also having a one-piece unitary metal construction which is fixed within the central passageway in the outer housing intermediate the front and back end and a wave spring having a predetermined spring constant for supplying spring tension to keep the
moveable valve member sealed. Also included is a gas valve mechanism for supplying a pressurized gas medium sufficient to overcome the spring tension and to drive the valve member forward unsealing the front end of the central passageway and releasing the pressurized gas.

The aerator valve assembly further includes a calibrated tension adjuster and the spring-loaded spring guide disposed on either end of the wave spring for compressing the wave spring. The wave spring can be a 360-degree contact wave spring, wherein the 360-degree wave spring provides continuous contact between the 360-degree wave spring - calibrated tension adjuster and the 360-degree wave spring - spring loaded spring guide.

The aerator valve assembly has further at least one sensor for sensing events. Sensors can include a linear shaft displacement counter for counting the number of times the valve member opens and closes; a vibration sensor, or accelerometer, for measuring vibration, a temperature sensor and/or an air pressure sensor. The assembly can also include externally accessible on-board memory for storing sensing data. The present invention is defined in accordance with claim 1.

### Brief Description of the Drawings

The foregoing and other objects, features, and advantages of the invention are apparent from the following detailed description taken in conjunction with the accompanying drawings in which:
FIG. 1 is a side view of a sanitary high-pressure aerator valve assembly in accordance with the present disclosure;
FIG. 2 is a partially disassembled view of the sanitary high-pressure aerator showing the valve in an open position allowing pressurized gas to escape at approximately 90 degrees to the valve, in accordance with the present disclosure shown in FIG. 1;
FIG. 2A is a partially disassembled view of the sanitary high-pressure aerator showing the valve in an open position allowing pressurized gas to escape at approximately less than 90 degrees and substantially horizontal to the valve in accordance with the present disclosure shown in FIG. 1;
FIG. 3 is an exploded view of the sanitary high-pressure aerator valve assembly in accordance with the present disclosure shown in FIG. 2;
FIG. 4 is a partially disassembled view of the sanitary high-pressure aerator in accordance with the present disclosure shown in FIG. 2;
FIG. 5 is a perspective view of the three-ear spring guide in accordance with the disclosure shown in FIG. 2;
FIG. 6 is a pictorial view of the data capture and analytics system in accordance with the disclosure shown in FIG. 1 ;
FIG. 7 is a pictorial view of an external directional adapter in accordance with the disclosure shown in FIG. 1; and
FIG. 8. is a pictorial view of an internal directional adapter in accordance with the disclosure shown in FIG. 1.

### Detailed Description

The following brief definition of terms shall apply throughout the application:

The term "comprising" means including but not limited to, and should be interpreted in the manner it is typically used in the patent context;

The phrases "in one arrangement," "according to one arrangement," and the like generally mean that the particular feature, structure, or characteristic following the phrase may be included in at least one arrangement of the present disclosure, and may be included in more than one arrangement of the present disclosure (importantly, such phrases do not necessarily refer to the same arrangement);

If the specification describes something as "exemplary" or an "example," it should be understood that refers to a non-exclusive example; and

If the specification states a component or feature "may," "can," "could," "should," "preferably," "possibly," "typically," "optionally," "for example," or "might" (or other such language) be included or have a characteristic, that particular component or feature is not required to be included or to have the characteristic.

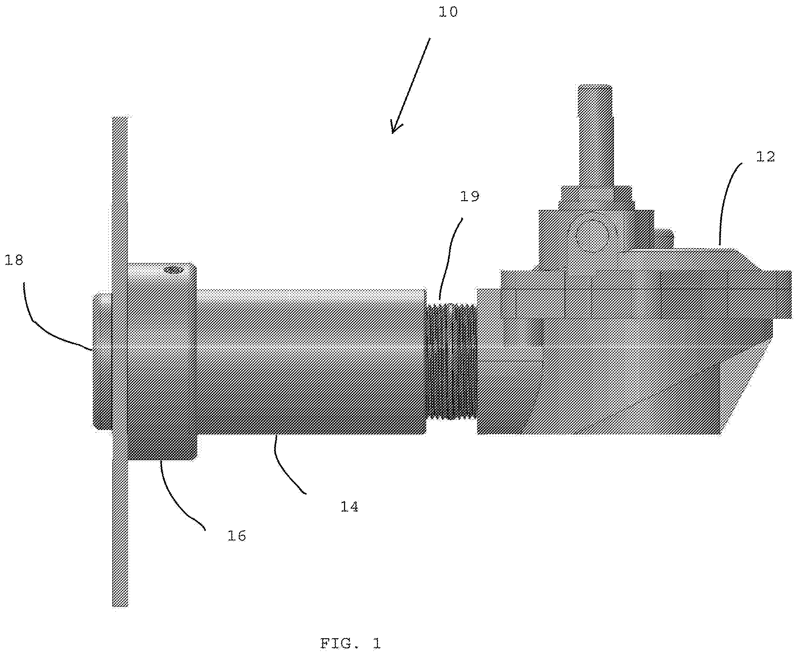

Referring to FIG. 1 there is shown a side view of a sanitary high-pressure aerator valve assembly 10 in accordance with the present disclosure. The assembly 10 includes outer housing aerator body 14, one-piece unitary valve 18, threaded pipe coupler 19, and solenoid / sensor housing 12.

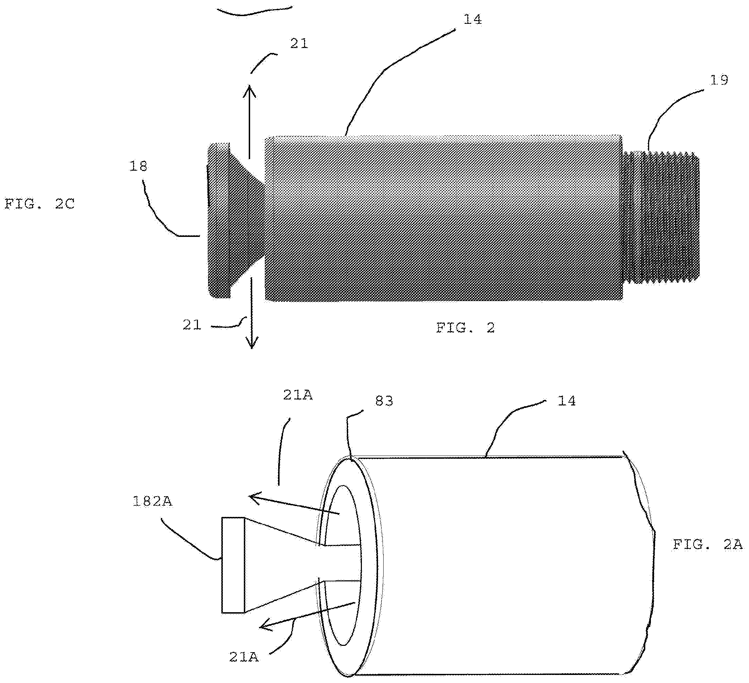

Referring also to FIG. 2 there is shown a partially disassembled view of the aerator 10 showing the one-piece valve 18 in an open position in accordance with the present disclosure shown in FIG. 2. It will be understood that pressurized air escapes through air gap 21 , substantially perpendicular to one-piece valve 18, to create a circular knifing action along the sides of the containment vessel to dislodge, or prevent, lodging of particulates. It
will also be appreciated that an optimum air gap ranges from 0.23622 cm (.093 inches) to 0.27432 (.108 inches). As will be described herein, the disclosure includes physical features to obtain the optimum air gap range without having to resort to external or cumbersome calibration tools or methods.

Referring also to FIG. 2A there is shown is a partially disassembled view of the sanitary high-pressure aerator showing the valve in an open position allowing pressurized gas flow 21 A to escape at approximately less than 90 degrees and substantially horizontal to the valve 182 A in accordance with the present disclosure shown in FIG. 1.

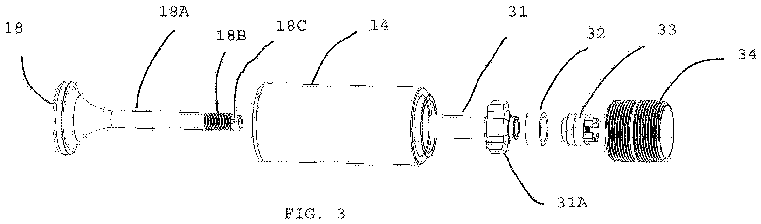

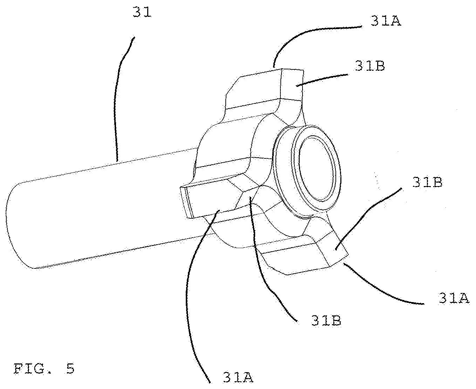

Referring also to FIG. 3 there is shown an exploded view of the sanitary high-pressure aerator valve assembly in accordance with the present disclosure shown in FIG. 2. A wave spring 32 disposed against the back end of spring guide member 31 keeps the valve 18 closed until actuated by an admission of a pressurized gas to the hollow central passageway 14 A. A conventional electric solenoid gas valve mechanism (FIG. 1-12) supplies a pressurized gas medium, such as air and the like, to the back end of the central passageway 14A to drive valve member 18 forward unsealing the front end of the passageway and releasing the pressurized gas to the interior of the storage vessel via air gap FIG. 2-21. For operation, the solenoid valve mechanism FIG. 1-12 can be attached to a compressed air supply line (not shown) and when pulsed normally for a 1/4+L second time duration at gas pressures in the 2,758-6,895 bar range (40-100 psi range), the wave spring 32 is overcome and unitary valve member 18 with enlarged sealing head moves forward opening the discharge valve and releasing the pressurized gas in a full circle direction.

Upon pulse termination, the internal spring member 32 immediately reseats the valve member blocking, mostly, any entry of granular material from the storage vessel into the inner valve body.

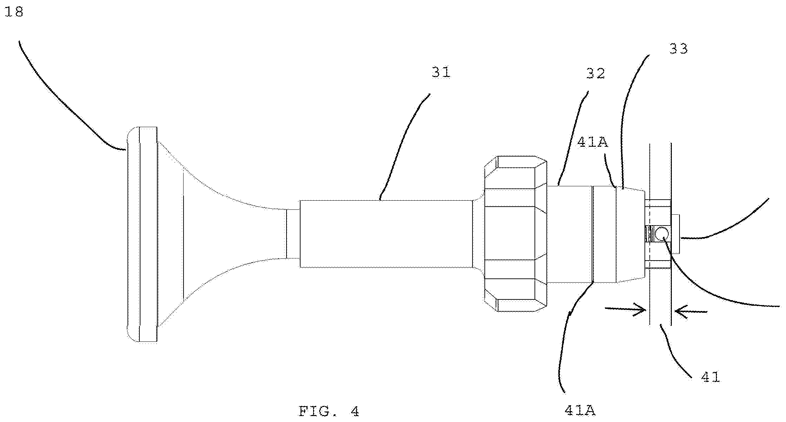

It will be appreciated that the one-piece spring guide member 31 comprises three ears (see FIG. S-31A) to reduce air flow obstruction and each ear is beveled 31B to reduce air resistance. To facilitate even force distribution around the circumference of the wave spring 32 and return of spring forces, thus reducing spring flutter, it will be appreciated that wave spring 32 includes at least one shimmed end (see FIG. 4-41 A) to provide 360
degrees contact between wave spring 32 and spring guide 31, and between wave spring 32 and calibrated tension adjuster 33.

Still referring to FIG. 3, tension spring pin hole 18C location on metal valve 18 is predetermined for desired spring tension when calibrated tension adjuster 33 is adjusted such that tension spring hole 18C is visible (See FIG. 4). It will be further understood that the location of tension spring hole 18C is predetermined as a function of the desired spring constant associated with spring 32 and expected air pressure. For example, the hole 18C can be located on valve 18 such that the air gap FIG. 2-21 is an optimal 0.23622 cm (.093 inches) to 0.27432 cm (.108 inches) for a given, or predetermined, spring constant associated with compression spring 32 and expected air pressure. Similarly, slotted tensioner 33 may be turned on calibrated valve threads 8SB until the tensioner 33 bottoms out at the end of the threads 85B. The end of the threads, or thread length, 85B may be predetermined such that the distance air gap 21 is in the optimal ranged for a given spring constant and air pressure.

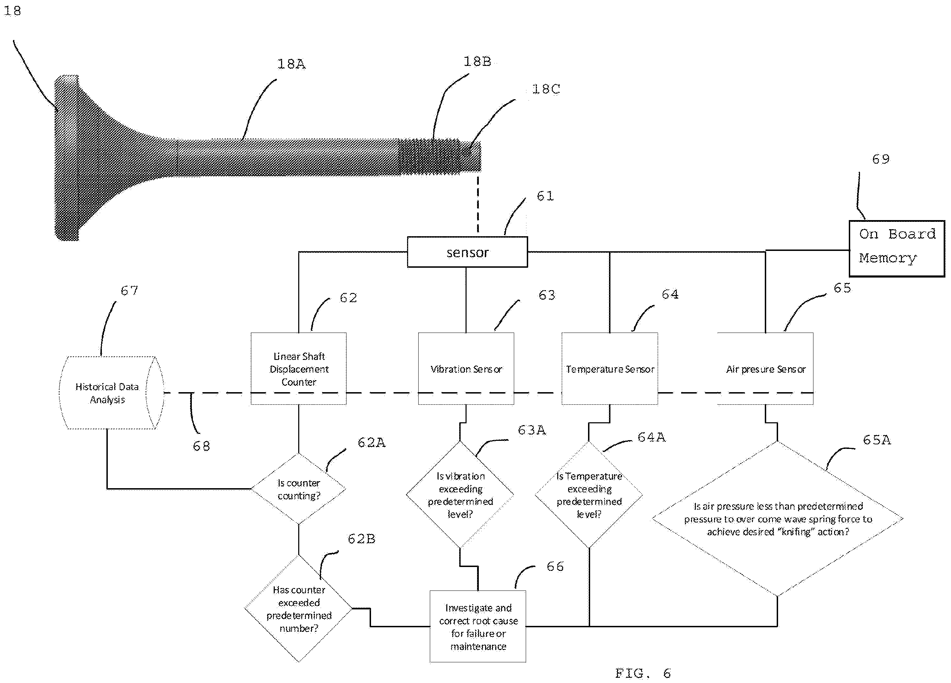

Referring also to FIG. 6 there is shown a pictorial view of the data capture and analytics system in accordance with the disclosure shown in FIG. 1. Sensor 61 is connectable (physically or optically) to valve assembly 10. It will be understood that for clarity, sensor 61 may be any suitable sensor for sensing or detecting events or changes in the operational environment of the high-pressure valve assembly. Events may include, for example, a counting sensor 62 for counting the number of times valve 18 moves, a vibration sensor 63 for sensing excessive vibration, a temperature sensor 64 for monitoring internal and ambient temperatures, or an air pressure sensor 65 for measuring the pressure to overcome wave spring 32. It will be appreciated and understood that the aforementioned sensors may provide data to indicate a malfunction, e.g., an attachment bolt is loose, or a weld is broken, thereby causing excessive vibration, or to indicate required maintenance.

Still referring to FIG. 6 decision blocks 62A, 63A, 64A, and 65A determine abnormal conditions and set an alert condition 66 for investigation. It will be appreciated that sensors 62-65 can report sensor conditions real time or store data in an offline database 67 for comparative and trend analysis for single and / or multiple aerators 10. Data may be stored locally in externally accessible onboard memory 69 and retrieved via wireless or wired connection 68.

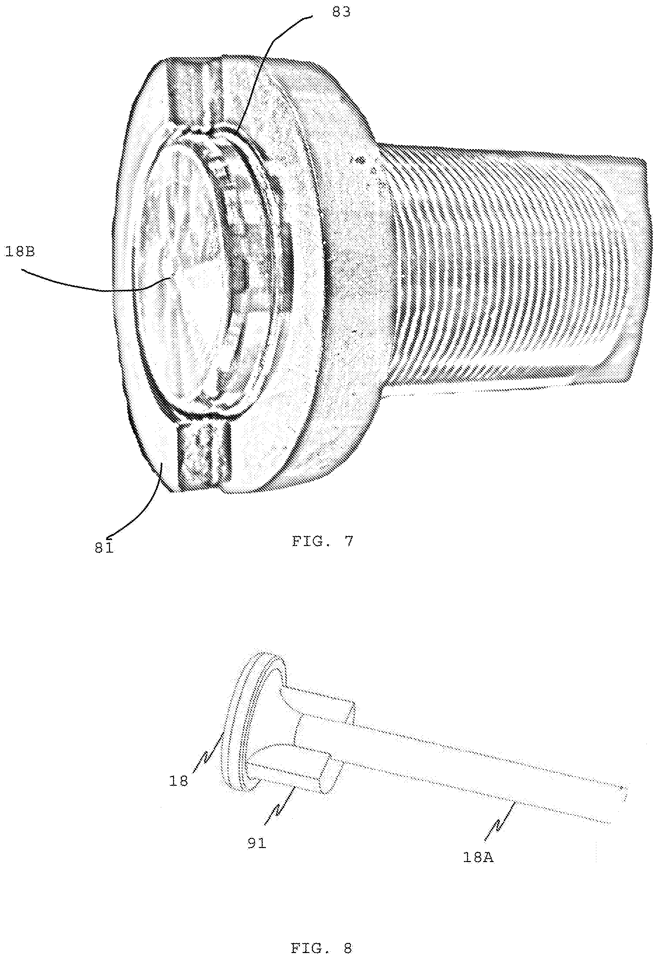

Referring also to FIG. 7 there is shown is a pictorial view of an external directional adapter 81 in accordance with the disclosure shown in FIG. 1. Referring also to FIG. 8. There is shown a pictorial view of an internal directional adapter 91 in accordance with the disclosure shown in FIG. 1.

Still referring to aforementioned figures. As pressurized gas (FIG. 2A -21 A) drives slidable piston member 182A forward unsealing the front end of the passageway and creating a circular opening defined by circular rim 83 (FIG 2A-83), as discussed earlier, between the enlarged piston head 18B and rim 83 (FIG 2A-83). External directional adapter 81 directs the gas flow 21 A in a predetermined path. It will be appreciated that the external directional adapter 81 prevents the release of the pressurized gas 21 A through sections, or arcs, of the circular opening defined by rim 83.

Similarly, as shown in FIG. 8, pressurized gas (FIG.2 A -21 A) drives slidable piston member 182 A forward unsealing the front end of the passageway and creating a circular opening defined by circular rim 83 (FIG 2A-83), as discussed earlier, between the enlarged piston head 18B and rim 83 (FIG 2A-83). Internal directional adapter 91 directs the gas flow 21 A in a predetermined path. It will be appreciated that the internal directional adapter 91 prevents the release of the pressurized gas 21 A through sections, or arcs, of the circular opening defined by rim 83.

Internal directional adapter 81 may be any suitable circumference such as 90 degrees, 120 degrees, 150 degrees, or 180 degrees. It will be appreciated that the internal directional adapter 81 blocks pressurized gas 21A from exiting certain sections of the housing 14 thereby directing the escaping gas 21 A through the unblocked sections, or arcs, of the circular opening defined by rim 83.

It should be understood that the foregoing description is only illustrative of the disclosure. Thus, various alternatives and modifications can be devised by those skilled in the art without departing from the disclosure. Accordingly, the present disclosure is intended to embrace all such alternatives, modifications and variances that fall within the scope of the appended claims.

## Claims

1. An aerator valve assembly (10) comprising:
an outer housing (14) with front and back ends terminating a central passageway;
a movable valve member (18) having a one-piece unitary metal construction slidably engaged within the central passageway in the outer housing (14), the valve member (18) having an enlarged head termination (18A) for sealing the front end of the passageway;
a spring-loaded spring guide member (31) also having a one-piece unitary metal construction which is fixed within the central passageway in the outer housing (14) intermediate the front and back ends of the central passageway;
a wave spring (32) having a predetermined spring constant for supplying spring tension to keep the moveable valve member (18) sealed; and
a gas valve mechanism for supplying a pressurized gas having a pressure sufficient to overcome the spring tension and to drive the moveable valve member (18) forward a predetermined distance within a portion of the central passageway, thus unsealing the front end of the central passageway and releasing the pressurized gas through a predetermined gap (21);
the aerator valve assembly (10) further comprising:
a slotted tension adjuster (33);
wherein the slotted tension adjuster (33) and the spring-loaded spring guide member (31) are disposed on either end of the wave spring (32) for compressing the wave spring (32);
wherein the movable valve member (18) further comprises:
a threaded length end (18B) disposed at an end opposite the enlarged head termination (18A), wherein the slotted tension adjuster (33) is threaded on the threaded length end (18B); and,
a tension spring hole (18C) arranged to be visible through the slotted tension adjuster (33) when the slotted tension adjuster (33) is adjusted on said threaded length end (18B),
wherein the location of the tension spring hole (18C) is predetermined as a function of the spring constant, the pressure of the pressurized gas, the threaded length end (18B) and the predetermined gap so that when the tension spring hole (18C) is visible through the slotted tension adjuster (33), the pressure of the pressurized gas is able to overcome the spring tension and drive the valve member (18) forward the predetermined distance, unsealing the front end of the central passageway to release the pressurized gas;
wherein the aerator valve assembly (10) further comprises at least one sensor (61) for sensing events associated with the aerator valve assembly (10).

2. The aerator valve assembly (10) as claimed in claim 1, wherein the wave spring (32) further comprises a 360 degree contact wave spring (32), wherein the 360 degree contact wave spring (32) provides continuous contact between the 360 degree contact wave spring (32) - slotted tension adjuster (33) and the 360 degree contact wave spring (32) - spring-loaded spring guide member (31).

3. The aerator valve assembly (10) as claimed in claim 2, wherein the wave spring (32) includes at least one shimmed end (41A).

4. The aerator valve assembly as claimed in any one of claims 1 to 3, wherein the at least one sensor (61) comprises a linear shaft displacement counter for counting the number of times the valve member (18) opens and closes.

5. The aerator valve assembly as claimed in any one of claims 1 to 4, wherein the at least one sensor (61) comprises a vibration sensor for measuring vibration.

6. The aerator valve assembly as claimed in any one of claims 1 to 5, wherein the at least one sensor (61) comprises a temperature sensor.

7. The aerator valve assembly as claimed in any one of claims 1 to 6, wherein the at least one sensor (61) comprises an air pressure sensor.

8. The aerator valve assembly (10) as claimed in any one of claims 1 to 7, further comprising externally accessible onboard memory (69) for storing sensing data.

9. The aerator valve assembly (10) as claimed in any one of claims 2 or 3 to 8 when dependent upon claim 2, wherein the moveable valve member (18) comprises a first valve member configured for releasing the pressurized gas perpendicular to the moveable valve member (18).

10. The aerator valve assembly (10) as claimed in any one of claims 2 or 3 to 8 when dependent upon claim 2, wherein the moveable valve member (18) comprises a second valve member configured for releasing the pressurized gas horizontal to the moveable valve member.

11. The aerator valve assembly (10) as claimed in any one of claims 2 or 3 to 8 when dependent upon claim 2, further comprising a passive directional air flow device.

12. The aerator valve assembly (10) as claimed in claim 11, wherein the passive directional air flow device comprises an internal directional air flow device.

13. The aerator valve assembly (10) as claimed in claim 11, wherein the passive directional air flow device comprises an external air flow device.

## Patentansprüche

1. Belüftungsventilanordnung (10), die Folgendes umfasst:
ein Außengehäuse (14) mit einem vorderen und einem hinteren Ende, die einen zentralen Durchgang abschließen; ein bewegliches Ventilelement (18) mit einer einstückigen einheitlichen Metallkonstruktion, das innerhalb des zentralen Durchgangs im Außengehäuse (14) verschiebbar in Eingriff steht, wobei das Ventilelement (18) einen vergrößerten Kopfabschluss (18A) zum Verschließen des vorderen Endes des Durchgangs aufweist;
ein federbelastetes Federführungselement (31) ebenfalls mit einer einstückigen einheitlichen Metallkonstruktion, das innerhalb des zentralen Durchgangs im Außengehäuse (14) zwischen dem vorderen und dem hinteren Ende des zentralen Durchgangs fixiert ist;
eine Wellenfeder (32) mit einer vorbestimmten Federkonstante zum Zuführen einer Federspannung, um das bewegliche Ventilelement (18) verschlossen zu halten; und einen Gasventilmechanismus zum Zuführen eines unter Druck stehenden Gases mit einem Druck, der ausreicht, um die Federspannung zu überwinden und um das bewegliche Ventilelement (18) um eine vorbestimmte Distanz innerhalb eines Abschnitts des zentralen Durchgangs vorwärts zu treiben, wodurch das vordere Ende des zentralen Durchgangs geöffnet und das unter Druck stehende Gas durch einen vorbestimmten Spalt (21) freigegeben wird;
wobei die Belüftungsventilanordnung (10) ferner Folgendes umfasst:
einen geschlitzten Spannungseinsteller (33);
wobei der geschlitzte Spannungseinsteller (33) und das federbelastete Federführungselement (31) an jedem Ende der Wellenfeder (32) zum Komprimieren der Wellenfeder (32) angeordnet sind;
wobei das bewegliche Ventilelement (18) ferner Folgendes umfasst:
ein mit Gewinde versehenes Längenende (18B), das an einem Ende gegenüber dem vergrößerten Kopfabschluss (18A) angeordnet ist, wobei der geschlitzte Spannungseinsteller (33) auf das mit Gewinde versehene Längenende (18B) geschraubt ist; und,
ein Spannfederloch (18C), das so angeordnet ist, dass es durch den geschlitzten Spannungseinsteller (33) sichtbar ist, wenn der geschlitzte Spannungseinsteller (33) auf dem mit Gewinde versehenen Längenende (18B) eingestellt ist,
wobei die Position des Spannfederlochs (18C) als eine Funktion der Federkonstante, des Drucks des unter Druck stehenden Gases, des mit Gewinde versehenen Längenendes (18B) und des vorbestimmten Spalts vorbestimmt ist, so dass, wenn das Spannfederloch (18C) durch den geschlitzten Spannungseinsteller (33) sichtbar ist, der Druck des unter Druck stehenden Gases die Federspannung überwinden und das Ventilelement (18) um die vorbestimmte Distanz vorwärts treiben kann, wodurch das vordere Ende des zentralen Durchgangs geöffnet wird, um das unter Druck stehende Gas freizugeben;
wobei die Belüftungsventilanordnung (10) ferner mindestens einen Sensor (61) zum Erfassen von Ereignissen umfasst, die mit der Belüftungsventilanordnung (10) assoziiert sind.

2. Belüftungsventilanordnung (10) nach Anspruch 1, wobei die Wellenfeder (32) ferner eine Wellenfeder (32) mit 360-Grad-Kontakt umfasst, wobei die Wellenfeder (32) mit 360-Grad-Kontakt einen durchgehenden Kontakt zwischen der Wellenfeder (32) mit 360-Grad-Kontakt - dem geschlitzten Spannungseinsteller (33) und der Wellenfeder (32) mit 360-Grad-Kontakt - dem federbelasteten Federführungselement (31) bereitstellt.

3. Belüftungsventilanordnung (10) nach Anspruch 2, wobei die Wellenfeder (32) mindestens ein unterlegtes Ende (41A) umfasst.

4. Belüftungsventilanordnung nach einem der Ansprüche 1 bis 3, wobei der mindestens eine Sensor (61) einen Linearwellenverschiebungszähler zum Zählen der Anzahl von Malen, die das Ventilelement (18) öffnet und schließt, umfasst.

5. Belüftungsventilanordnung nach einem der Ansprüche 1 bis 4, wobei der mindestens eine Sensor (61) einen Vibrationssensor zum Messen von Vibration umfasst.

6. Belüftungsventilanordnung nach einem der Ansprüche 1 bis 5, wobei der mindestens eine Sensor (61) einen Temperatursensor umfasst.

7. Belüftungsventilanordnung nach einem der Ansprüche 1 bis 6, wobei der mindestens eine Sensor (61) einen Luftdrucksensor umfasst.

8. Belüftungsventilanordnung (10) nach einem der Ansprüche 1 bis 7, die ferner einen extern zugänglichen Bordspeicher (69) zum Speichern von Erfassungsdaten umfasst.

9. Belüftungsventilanordnung (10) nach einem der Ansprüche 2 oder 3 bis 8, wenn abhängig von Anspruch 2, wobei das bewegliche Ventilelement (18) ein erstes Ventilelement umfasst, das dazu ausgelegt ist, das unter Druck stehende Gas senkrecht zu dem beweglichen Ventilelement (18) freizugeben.

10. Belüftungsventilanordnung (10) nach einem der Ansprüche 2 oder 3 bis 8, wenn abhängig von Anspruch 2, wobei das bewegliche Ventilelement (18) ein zweites Ventilelement umfasst, das dazu ausgelegt ist, das unter Druck stehende Gas horizontal zu dem beweglichen Ventilelement freizugeben.

11. Belüftungsventilanordnung (10) nach einem der Ansprüche 2 oder 3 bis 8, wenn abhängig von Anspruch 2, die ferner eine passive direktionale Luftstromvorrichtung umfasst.

12. Belüftungsventilanordnung (10) nach Anspruch 11, wobei die passive direktionale Luftstromvorrichtung eine interne direktionale Luftstromvorrichtung umfasst.

13. Belüftungsventilanordnung (10) nach Anspruch 11, wobei die passive direktionale Luftstromvorrichtung eine externe Luftstromvorrichtung umfasst.

## Revendications

1. Ensemble soupape d'aérateur (10), comprenant :
un logement extérieur (14) avec des extrémités avant et arrière terminant une voie de passage centrale ;
un élément soupape mobile (18) ayant une construction métallique unitaire monopièce engagée de façon coulissante à l'intérieur de la voie de passage centrale dans le logement extérieur (14), l'élément soupape (18) ayant une terminaison de tête agrandie (18A) pour assurer l'étanchéité de l'extrémité avant de la voie de passage ; un élément à ressort de guidage de ressort (31) ayant également une construction métallique unitaire monopièce qui est fixée à l'intérieur de la voie de passage centrale dans le logement extérieur (14) de façon intermédiaire entre les extrémités avant et arrière de la voie de passage centrale ;
un ressort ondulé (32) ayant une constante de rappel prédéterminée pour fournir une tension de ressort pour maintenir l'élément soupape mobile (18) étanche ; et
un mécanisme de soupape à gaz pour fournir un gaz sous pression ayant une pression suffisante pour dépasser la tension de ressort et pour entraîner l'élément soupape mobile (18) vers l'avant sur une distance prédéterminée à l'intérieur d'une portion de la voie de passage centrale, ainsi annulant l'étanchéité de l'extrémité avant de la voie de passage centrale et libérant le gaz sous pression à travers un espace prédéterminé (21) ;
l'ensemble soupape d'aérateur (10) comprenant en outre :
un organe d'ajustement de tension fendu (33) ;
dans lequel l'organe d'ajustement de tension fendu (33) et l'élément à ressort de guidage de ressort (31) sont disposés sur l'une ou l'autre extrémité du ressort ondulé (32) pour comprimer le ressort ondulé (32) ;
dans lequel l'élément soupape mobile (18) comprend en outre :
une extrémité de longueur filetée (18B) disposée à une extrémité opposée à la terminaison de tête agrandie (18A), dans lequel l'organe d'ajustement de tension fendu (33) est vissé sur l'extrémité de longueur filetée (18B) ; et,
un trou de ressort de tension (18C) agencé pour être visible à travers l'organe d'ajustement de tension fendu (33) lorsque l'organe d'ajustement de tension fendu (33) est ajusté sur ladite extrémité de longueur filetée (18B),
dans lequel l'emplacement du trou de ressort de tension (18C) est prédéterminé en fonction de la constante de rappel, de la pression du gaz sous pression, de l'extrémité de longueur filetée (18B), et de l'espace prédéterminé, de telle sorte que, lorsque le trou de ressort de tension (18C) est visible à travers l'organe d'ajustement de tension fendu (33), la pression du gaz sous pression est capable de dépasser la tension de ressort et d'entraîner l'élément soupape (18) vers l'avant sur la distance prédéterminée, annulant l'étanchéité de l'extrémité avant de la voie de passage centrale pour libérer le gaz sous pression ;
dans lequel l'ensemble soupape d'aérateur (10) comprend en outre au moins un capteur (61) pour détecter des événements associés à l'ensemble soupape d'aérateur (10).

2. Ensemble soupape d'aérateur (10) tel que revendiqué dans la revendication 1, dans lequel le ressort ondulé (32) comprend en outre un ressort ondulé de contact à 360 degrés (32), dans lequel le ressort ondulé de contact à 360 degrés (32) assure un contact continu entre le ressort ondulé de contact à 360 degrés (32) - l'organe d'ajustement de tension fendu (33) et le ressort ondulé de contact à 360 degrés (32) - l'élément à ressort de guidage de ressort (31).

3. Ensemble soupape d'aérateur (10) tel que revendiqué dans la revendication 2, dans lequel le ressort ondulé (32) inclut au moins une extrémité à cale (41A).

4. Ensemble soupape d'aérateur tel que revendiqué dans l'une quelconque des revendications 1 à 3, dans lequel l'au moins un capteur (61) comprend un organe de comptage de déplacements de tige linéaire pour compter le nombre de fois que l'élément soupape (18) s'ouvre et se ferme.

5. Ensemble soupape d'aérateur tel que revendiqué dans l'une quelconque des revendications 1 à 4, dans lequel l'au moins un capteur (61) comprend un capteur de vibration pour mesurer la vibration.

6. Ensemble soupape d'aérateur tel que revendiqué dans l'une quelconque des revendications 1 à 5, dans lequel l'au moins un capteur (61) comprend un capteur de température.

7. Ensemble soupape d'aérateur tel que revendiqué dans l'une quelconque des revendications 1 à 6, dans lequel l'au moins un capteur (61) comprend un capteur de pression d'air.

8. Ensemble soupape d'aérateur (10) tel que revendiqué dans l'une quelconque des revendications 1 à 7, comprenant en outre une mémoire embarquée accessible de façon externe (69) pour stocker des données de détection.

9. Ensemble soupape d'aérateur (10) tel que revendiqué dans l'une quelconque des revendications 2, ou 3 à 8 lorsqu'elle dépend de la revendication 2, dans lequel l'élément soupape mobile (18) comprend un premier élément soupape configuré pour libérer le gaz sous pression perpendiculairement à l'élément soupape mobile (18).

10. Ensemble soupape d'aérateur (10) tel que revendiqué dans l'une quelconque des revendications 2, ou 3 à 8 lorsqu'elle dépend de la revendication 2, dans lequel l'élément soupape mobile (18) comprend un second élément soupape configuré pour libérer le gaz sous pression horizontalement à l'élément soupape mobile.

11. Ensemble soupape d'aérateur (10) tel que revendiqué dans l'une quelconque des revendications 2, ou 3 à 8 lorsqu'elle dépend de la revendication 2, comprenant en outre un dispositif d'écoulement d'air directionnel passif.

12. Ensemble soupape d'aérateur (10) tel que revendiqué dans la revendication 11, dans lequel le dispositif d'écoulement d'air directionnel passif comprend un dispositif d'écoulement d'air directionnel interne.

13. Ensemble soupape d'aérateur (10) tel que revendiqué dans la revendication 11, dans lequel le dispositif d'écoulement d'air directionnel passif comprend un dispositif d'écoulement d'air externe.
